(19) **Europäisches Patentamt**
**European Patent Office**
**Office européen des brevets**

(11) **EP 4 357 813 A1**

(12) **EUROPEAN PATENT APPLICATION**

(43) Date of publication:
**24.04.2024  Bulletin 2024/17**

(51) International Patent Classification (IPC):
*G01S 13/931* (2020.01)    *G01S 7/41* (2006.01)
*G01S 13/52* (2006.01)    *B60W 30/095* (2012.01)
*B60W 30/12* (2020.01)    *G01C 21/36* (2006.01)

(21) Application number: **22203038.9**

(22) Date of filing: **21.10.2022**

(52) Cooperative Patent Classification (CPC):
**G01S 13/931; B60W 30/095; B60W 30/12;
G01S 7/415; G01S 13/52;** G01C 21/3658;
G01S 17/931; G01S 2013/932; G01S 2013/9323

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Magna Electronics Sweden AB
447 83 Vårgårda (SE)**

(72) Inventor: **HOFMAN, Martin
85716 Unterschleissheim (DE)**

(74) Representative: **Westpatent AB
Almekärrsvägen 11
443 39 Lerum (SE)**

(54) **A VEHICLE RADAR SYSTEM ARRANGED TO PROVIDE AN ESTIMATED ROAD LANE**

(57)    The present disclosure relates to a vehicle environmental detection system (3) comprising a control unit arrangement (9), and at least one environmental data retrieval arrangement (7) that is adopted to provide one or more detections ($8_L$, $8_R$) representing objects. The environmental detection system (3) is adapted to
- determine an estimated travelling path (E), and to
- define a plurality of segments (11a-11j) along the estimated travelling path (E).

The segments (11a-11j) together define an estimated road lane (13), where each segment (11a-11j) is defined by a corresponding segment length ($e_h$, $e_j$) along the estimated travelling path (E), and by at least one lateral distance ($d_L$, $d_R$) from the estimated travelling path (E) to at least one lateral boundary ($12_L$, $12_R$) of the corresponding segment (11a-11j).

FIG. 2

**Description**

The present disclosure relates to a vehicle radar system comprising a control unit arrangement, and at least one transceiver arrangement arranged to generate and transmit radar signals, and to receive reflected radar signals.

Many vehicle radar systems comprise environmental detection systems such as for example radar systems, Lidar systems and camera systems. For example, a radar system comprises one or more radar transceivers that are arranged for generating radar signals that are transmitted, reflected and received by means of appropriate antennas comprised in the radar system. The radar signals may for example be in the form of FMCW (Frequency Modulated Continuous Wave) signals.

For a collision avoidance system in a vehicle, it is desired to obtain a sufficiently reliable representation of at least a part of the environment surrounding the vehicle and may be formed as a free space representation. Such a representation should comprise both stationary and moving objects.

Various ways of representing a free space on point cloud data such as from radar systems, Lidar systems, camera systems and others have been developed in previous works.

For example, there are methods based on occupancy grids which rely on first generating a generic occupancy grid representation. In a second step a lane model can be used to find a road boundary. Occupancy grids are commonly used and typically, these grids are defined in global world coordinates.

Thus, the data model is static in the environment and therefore allows integration and accumulation of sensor information, even if the sensor system is moving.

Methods based on occupancy grids require a significant amount of processing resources and are therefore not applicable to devices with low memory and processing capabilities.

Other methods do neither require occupancy grids nor machine learning tools. For example, a radial free space grid is proposed in US 11,226,407 B2. This method is computationally fast, but measurement data does not spatially align to the model. And thus, the data can only be processed independently in each radar cycle and the data cannot be accumulated over time.

It is however desired to obtain a more flexible vehicle environmental detection system, adapted to provide an estimated road lane, which overcomes the above limitations.

The object of the present disclosure is thus to provide a vehicle environmental detection system adapted to provide an estimated road lane that is more flexible than prior art environmental detection systems with reduced demands on memory and processing power compared to previo0ulys known such systems.

This object is achieved by means of a vehicle environmental detection system comprising a control unit arrangement, and at least one environmental data retrieval arrangement that is adopted to provide one or more detections representing objects. The environmental detection system is adapted to determine an estimated travelling path, and to define a plurality of segments along the estimated travelling path, where the segments together define an estimated road lane. Each segment is defined by a corresponding segment length along the estimated travelling path, and by at least one lateral distance from the estimated travelling path to at least one lateral boundary of the corresponding segment.

This coherent aggregation of information over time confers a light-weight environmental detection system with low demands on memory and processing power.

According to some aspects, each segment further is defined by an angle that corresponds to a curvature of the segment along the estimated travelling path.

This provides a more accurate estimation of the road lane.

According to some aspects, the environmental detection system is adapted to define each boundary by means of one or more stationary detections.

Using stationary detections provides a practical approach where acquired measurement data can be mapped directly to the stationary environment.

According to some aspects, the environmental detection system is adapted to define each lateral boundary by means of a stationary detection in the present segment that is positioned closest to the estimated travelling path.

This is an uncomplicated way to determine the lateral boundaries, where the lateral distances are set to match to the stationary detection with the smallest lateral distance in the corresponding segment. This is straightforward, efficient and requires no additional memory.

According to some aspects, the environmental detection system is adapted to define each lateral boundary by means of a histogram of distances to stationary detections in the present segment.

Having a histogram of lateral distances for each segment overcomes possible problems with false stationary detections.

According to some aspects, the environmental detection system is adapted to assign weights to the stationary detections in each segment. Each weight corresponds to a determined possibility that the corresponding stationary detection is associated with a road lane border object. The environmental detection system is adapted to define the lateral boundary of the present segment by means of the stationary detection that has been assigned the highest weight value that corresponds to a highest determined possibility.

In this way, both quality and memory resources are further optimized.

According to some aspects, the environmental detection system is adapted to define the segments in stationary coordinates such that each segment will remain at the same physical position when the vehicle environmental detection system moves.

This means that the segments are continuously shifted "backwards" as the ego vehicle moves forward, the segments having a semantic assignment to the physical world such that each segment will stay at the same physical position during vehicle movement. In this way, memory resource requirements are minimized.

According to some aspects, the environmental detection system is adapted to be installed in an ego vehicle, where the environmental detection system further is adapted to determine the estimated travelling path by performing an analysis of at least one of determined ego velocity, steering wheel angle and yaw rate of the ego vehicle.

This provides an accurate estimate of the travelling path.

According to some aspects, the environmental detection system is adapted to form the estimated road lane by means of a predetermined number of segments, where previous segments are discarded and new segments are added as the environmental detection system moves such that the predetermined number of segments is maintained.

This means that each segment will stay at the same physical position during vehicle movement. This reduces memory requirements and calculation complexity.

According to some aspects, the environmental detection system is adapted to determine that the estimated travelling path is changing, to save a representation of at least one lateral boundary of each corresponding segment and to determine an updated estimated travelling path. The environmental detection system is further adapted to determine updated segments such that, where possible for each updated segment, updated lateral distances are determined for the updated estimated travelling path and the saved representation of said lateral boundary.

In this way, a set of updated segments is formed, defining an updated estimated road lane, when the estimated travelling path is changing.

There are also disclosed herein methods and control unit arrangements associated with the above-mentioned advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The present disclosure will now be described more in detail with reference to the appended drawings, where:

| | |
|---|---|
| Figure 1 | shows a schematic top view of a vehicle with a vehicle radar system; |
| Figure 2 | shows a schematic top view of a first example of a an estimated road lane; |
| Figure 3A-C | show a schematic top view of a second example of a an estimated road lane; |
| Figure 4A-B | show a schematic top view of a third example of a an estimated road lane; |
| Figure 5 | shows a flowchart for methods according to the present disclosure; |
| Figure 6 | schematically illustrates a control unit; |
| Figure 7 | shows an example computer program product; and |
| Figure 8 | shows a flowchart for further methods according to some aspects of the present disclosure. |

DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

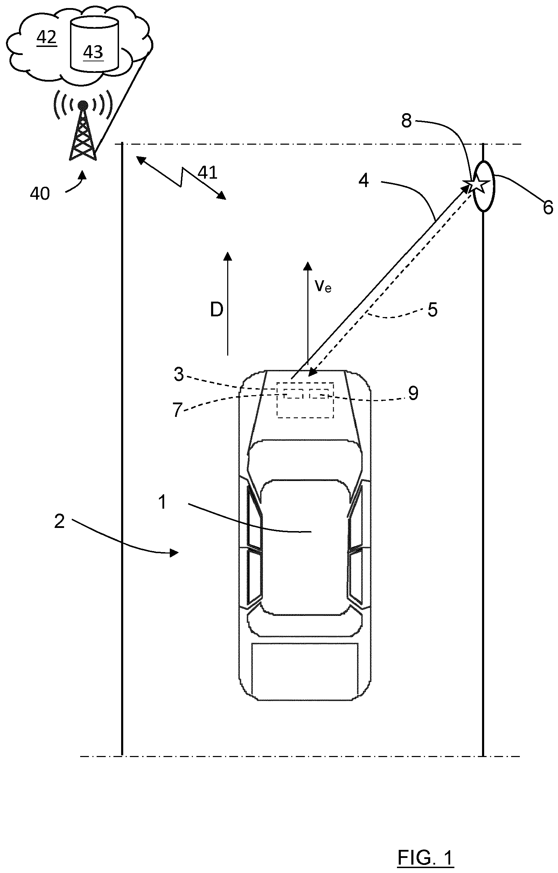

Figure 1 schematically shows a top view of an ego vehicle 1 arranged to run on a road 2 in a direction D having an ego velocity $v_e$, where the vehicle 1 comprises a vehicle radar system 3 which is arranged to distinguish and/or resolve single targets from the surroundings by transmitting signals 4 and receiving reflected signals 5 and using a Doppler effect in a previously well-known manner. The vehicle radar system 3 thus comprises a radar transceiver arrangement 7 and is arranged to provide azimuth angles of detections 8 that are associated with possible target objects 6 by simultaneously sampling and analyzing phase and amplitude of the received signals 5. The radar signals may for example be in the form of FMCW (Frequency Modulated Continuous Wave) signals, for example operating around 77 GHz. The vehicle radar system 3 also comprises a control unit arrangement 9.

According to some aspects, at each radar cycle, a detection list containing multiple radar observations is generated by the radar system 3. Each detection in the list is defined by a triplet $D_i = \left( r_i, \varphi_i, v_i^D \right)$ consisting of range $r_i$, azimuth $\varphi_i$ and radial velocity $v_i^D$ (a.k.a. Doppler velocity).

The vehicle radar system 3 is adapted to classify these detections $D_i$ to belong either to a moving object or to the stationary environment. This can for example be done by comparing the radial velocities $v_i^D$ against the expected velocity of the stationary environment at the position of detection 8. Other methods such as motion segmentation can be used to further improve or refine this classification.

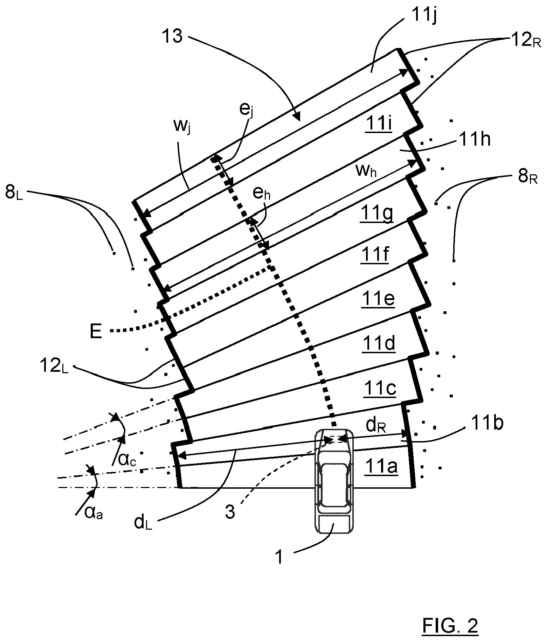

Generally, with reference also to Figure 2, the vehicle radar system 3 is constituted by a vehicle environmental detection system 3 which comprises a control unit arrangement 9, and at least one environmental data retrieval arrangement 7 that is adopted to provide one or more detections $8_L$, $8_R$ representing objects. As mentioned above, the data retrieval arrangement 7 is according to some aspects constituted by a radar transceiver arrangement 7, but other alternatives are also conceivable as will be mentioned later.

According to the present disclosure, the environmental detection system 3 is adapted to determine an estimated travelling path E, and to define a plurality of segments 11a-11j along the estimated travelling path E. The estimated travelling path is determined for the vehicle environmental detection system 3, and in practice for the ego vehicle 1, since the vehicle environmental detection system 3 is adapted to be mounted in the ego vehicle 1.

The segments 11a-11j together define an estimated road lane 13, where each segment 11a-11j is defined by a corresponding segment length $e_h$, $e_j$ along the estimated travelling path E, and by at least one lateral distance $d_L$, $d_R$ from the estimated travelling path E to at least one lateral boundary $12_L$, $12_R$ of the corresponding segment 11a-11j.

The segment length $e_h$, $e_j$ and the lateral distances $d_L$, $d_R$ are only indicated for a few segments 11h, 11j and one segment 11b, respectively, in Figure 2 for reasons of clarity, but it should be understood that every segment is defined by a corresponding segment length and lateral distance. Also, only a few lateral boundaries $12_L$, $12_R$ are indicated in Figure 2 for the same reasons, but every segment is associated with at least one corresponding lateral boundary

Coherent aggregation of information over time according to the present disclosure confers improvement over prior art occupancy grids that consume much memory and processing power. The present disclosure relates to a light-weight environmental detection system 3 with low demands on memory and processing power.

According to some aspects, the segment length $e_h$, $e_j$ can be fixed and/or predetermined, for example fixed at a predetermined length of about 2 meters. The segment length can of course be determined in many different ways and can be different from segment to segment of between groups of segments.

A road boundary constituted by a lateral boundary $12_L$, $12_R$ can be robustly defined along the estimated travelling path E using sparse detection points generated from any point cloud source such as a radar system. A non-parametric lane model is applied to define the lateral boundary directly via the segments 11a-11j. This avoids any memory and runtime intensive processing such as occupancy grids or deep learning. The present disclosure is therefore computationally efficient and is well suited to run on low performance processors. Despite the computational efficiency, data can be aggregated in world coordinates and hence performance properties similar to approaches based on occupancy grids can be achieved.

Depending on the number of segments 11a-11j, and on if the segment length $e_h$, $e_j$ are fixed or predetermined, the lateral boundary $12_L$, $12_R$ can be represented with just the set of lateral distances $d_L$, $d_R$. Given a known lane representation, no further longitudinal values need to be stored for the road boundary. This results in very low memory requirements for the road boundary representation.

At least on lateral boundary $12_L$, $12_R$ is defined in this manner.

According to some aspects, each segment 11a-11j is further defined by an angle $\alpha_a$, $\alpha_c$ (only a few indicated in Figure 2 for reasons of clarity) that corresponds to a curvature of the segment 11a-11j along the estimated travelling path E. This provides a more accurate estimation of the road lane 13.

According to some aspects, the environmental detection system 3 is adapted to define each boundary $12_L$, $12_R$ by means of one or more stationary detections $8_L$, $8_R$ (only a few stationary detections $8_L$, $8_R$ are indicated in Figure 2 for reasons of clarity). According to some aspects, stationary detections are considered to belong to a stationary environment. Using stationary detections provides a practical approach.

Generally, the detections used need not be stationary, since the actual drivable area to any object, no matter if stationary of moving, may be considered. In the following it is, however, assumed that the detections are stationary.

According to some aspects, the environmental detection system 3 is adapted to define each lateral boundary $12_L$, $12_R$ by means of a stationary detection $8_L$, $8_R$ in the present segment that is positioned closest to the estimated travelling path E.

This is an uncomplicated way to determine the lateral boundaries $12_L$, $12_R$, where the lateral distances $d_L$, $d_R$ are set to match to the stationary detection $8_L$, $8_R$ with the smallest lateral distance in the corresponding segment. This is straight-forward, efficient and requires no additional memory.

However, in practical application, there may be false stationary detections, for example resulting from ground clutter or other noise sources. These false positive detections do not appear often, but could impact the free space representation and would therefore degrade the performance.

According to some aspects, the environmental detection system 3 is adapted to define each lateral boundary $12_L$, $12_R$ by means of a histogram of distances to stationary detections $8_L$, $8_R$ in the present segment.

Having a histogram of lateral distances for each segment overcomes a possible problem with false stationary detections. This means that all stationary detections which map to a given segment 11a-11j are used to build up a histogram over lateral distances. This can even be done over multiple cycles because the segments stay aligned to the environment in world coordinates over time as will be described later. Finding the maximum in the histogram then leads to a very robust estimate of the correct lateral distance $d_L$, $d_R$.

However, the histogram approach requires more memory since each histogram requires multiple segment values. Furthermore, a separate histogram is needed for each of the segments 11a-11j.

According to some aspects, the environmental detection system 3 is adapted to assign weights to the stationary detections $8_L$, $8_R$ in each segment, where each weight corresponds to a determined possibility that the corresponding stationary detection $8_L$, $8_R$ is associated with a road lane border object 6. The environmental detection system 3 is adapted to define the lateral boundary $12_L$, $12_R$ of the present segment by means of the stationary detection $8_L$, $8_R$ that has been assigned the highest weight value that corresponds to a highest determined possibility.

This means that instead of storing a full histogram, a mixture model can be used, which further optimizes both quality and memory resources. Here a number of N mixtures is defined where each mixture is defined by a mode and a weight. The mode is set to a lateral distance value $d_L$, $d_R$ and the weight defines how robustly this lateral distance is observed.

The mixture model can be updated in every cycle by taking the smallest lateral distance of all stationary detections in the corresponding segment and mapping it to the existing mixtures. If it maps to an existing mixture, then this mixture is updated, and the weight is increased. If it does not map to any existing mixtures, then the mixture with the lowest weight is removed and a new mixture with low weight at the new lateral position is created.

Then, the mode with the highest weight defines the final lateral distance $d_L$, $d_R$ in the corresponding segment 11a-11j. This is both efficient, results in good quality and has low memory requirements.

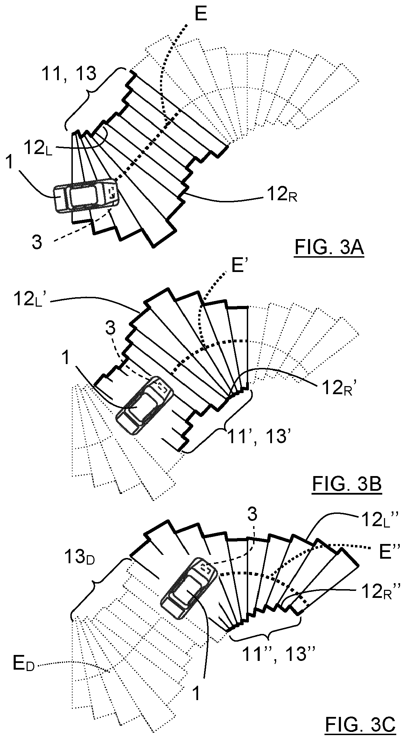

According to some aspects, with reference to Figure 3A, Figure 3B and Figure 3C, the environmental detection system 3 is adapted to define the segments 11a-11j in stationary coordinates such that each segment will remain at the same physical position when the vehicle environmental detection system 3 moves.

According to some further aspects, the environmental detection system 3 is adapted to form the estimated road lane 13, 13', 13" by means of a predetermined number of segments 11, 11', 11", where previous segments are discarded and new segments are added as the environmental detection system 3 moves such that the predetermined number of segments 11, 11', 11" is maintained.

This means that the estimated travelling path E is discretized into segments of fixed size and stay attached to the world coordinates as the ego vehicle 1 moves. In other words, the segments 11, 11', 11" are continuously shifted "backwards" as the ego vehicle 1 moves forward, the segments 11, 11', 11" having a semantic assignment to the physical world. This means that each segment 11, 11', 11" will stay at the same physical position during vehicle movement.

Figure 3A, Figure 3B and Figure 3C show a scenario in world coordinates where the ego vehicle 1 moves along its driving path E, E', E". The road lane 13, 13', 13" and the estimated road lane 13, 13', 13" has a constant number of current segments 11, 11', 11", in this example ten segments 11, 11', 11" are current, and their lateral boundaries $12_L$, $12_R$; $12_L$', $12_R$', $12_L$", $12_R$" these are depicted as bold lines.

According to some aspects, in every cycle, the driven distance and the accumulated turn angle is calculated based on the speed and the yaw rate of the ego vehicle 1. These values are used to shift the segments 11, 11', 11" continuously in every cycle. If the segments 11, 11', 11" are shifted by more than a full segment length, then the segments are "rolled over". By that, the segment which moves out of the observation area is discarded and a new segment on the other side of the lane is created. This way the number of current segments stays constant.

This means that the segments 11, 11', 11" are shifted in every cycle based on the ego velocity $v_e$. If, for example, the segment length is 2 meter, in a first cycle the ego velocity $v_e$ may be such that the segment is shifted by 1.5 meters. If then, in a second cycle, it shall be shifted again by 1.5 meters, the sum 1.5m +m1.5m = 3 meters is greater than 2 meters. Then the content of the segments, i.e. the lateral boundaries $12_L$, $12_R$, are copied over in the array to the next segments.

According to some aspects, is desired to have the lateral boundaries $12_L$, $12_R$ co-aligned with the physical world, while at the same time allow only the "relevant" section to be retained in a memory as the ego vehicle 1 moves forward.

The described concept is a way to represent the data in de-facto world coordinates and at the same time only needing to store a limited amount of data around the ego vehicle's position. Using world coordinates has the advantage that the measurement data coming from the vehicle environmental detection system 3 can be mapped directly to the stationary environment.

When the number of segments 11, 11', 11" is constant, the segments 11, 11', 11" are ordered and keep a constant assignment to the data. This has several advantages, one of which is that this representation has the potential to be directly combined with machine learning algorithms.

According to some aspects, the environmental detection system 3 is adapted to be installed in an ego vehicle 1, and is adapted to determine the estimated travelling path E by performing an analysis of at least one of determined ego velocity $v_e$, steering wheel angle and yaw rate of the ego vehicle 1. This provides an accurate estimate of the travelling path.

It is important to note that the road lane in front of the ego vehicle 1 in the forward driving direction D, and the road lane 13 behind the ego vehicle 1 have different properties. As shown in Figure 3C, the driven road lane $13_D$ behind the ego vehicle 1 is running along a driven travelling path $E_D$ that the ego vehicle 1 already has driven. This means that the driven travelling path $E_D$ is exactly known, whereas the estimated travelling path E" in the front of the ego vehicle 1 has not yet been driven and therefore must be estimated.

The challenge of precisely estimating the travelling path E relates to the general topic of path planning. This can be arbitrarily complex and can also require a lot of input information about surrounding objects and free space.

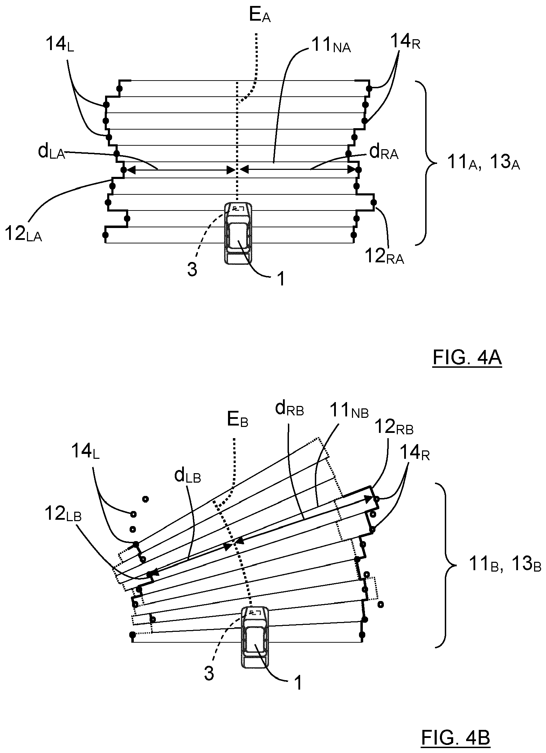

This keeps the estimated road lane 13 exactly located in global world coordinates, but only works as long as the estimated travelling path E stays constant. However, the estimated travelling path E can change, for example when a driver exits a turn or decides to enter in a new turn. This is exemplified in Figure 4A, where the ego vehicle 1 is moving straight ahead, and in Figure 4B, where the ego vehicle 1 suddenly turns to the left.

The estimated travelling path E can still be correctly determined, but the lateral distances $d_L$, $d_R$ that are stored for each segment for the estimated road lane 13 are no longer valid.

In order to handle such situations, according to some aspects, the environmental detection system 3 is adapted to determine that the estimated travelling path $E_A$ is changing and to save a representation $14_L$, $14_R$ of at least one lateral boundary $12_{LA}$, $12_{RA}$ of each corresponding segment $11_A$.

In this example, this is done by retrieving a center point $14_L$, $14_R$ (only a few indicated in Figure 4A and Figure 4B for reasons of clarity) of each lateral boundary $12_{LA}$, $12_{RA}$ and storing these in a temporary memory. These center points $14_L$, $14_R$ are depicted as circles. The representation can of course be made in many other ways.

The environmental detection system 3 is further adapted to determine an updated estimated travelling path $E_B$. The lateral distances $d_{LA}$, $d_{RA}$ are not yet changed which results in a bent round lane boundary, as depicted in dotted lines in Figure 4B.

The environmental detection system 3 is further adapted to determine updated segments $11_{NB}$ such that, where possible for each updated segment $11_{NB}$, updated lateral distances $d_{LB}$, $d_{RB}$ are determined for the updated estimated travelling path $E_B$ and the saved representation $14_L$, $14_R$ of said lateral boundary.

This means that in order to correct the lateral boundaries, a prediction step is performed for each segment $11_A$, where one of the temporarily saved center points $14_L$, $14_R$ is searched for. If a matching center point $14_L$, $14_R$ is found, the lateral distances $d_{LB}$, $d_{RB}$ and corresponding lateral boundaries $12_{LB}$, $12_{RB}$ are adjusted accordingly. If no matching center point is found, then the lateral boundary is set to unknown. A consecutive post filtering or update stages will fill the missing values with meaningful data.

In the present example with reference to Figure 4A and Figure 4B, for a certain segment $11_{NA}$ in the estimated road lane $13_A$, the lateral distances $d_{LA}$, $d_{RA}$ are updated for the new estimated travelling path $E_B$ such that the updated lateral distances $d_{LB}$, $d_{RB}$ define an updated segment $11_{NB}$. In this way, a set of updated segments $11_B$ is formed, defining an updated estimated road lane $13_B$.

According to some aspects, the environmental detection system 3 is constituted by a vehicle radar system 3 comprising at least one transceiver arrangement 7 arranged to generate and transmit radar signals 4, and to receive reflected radar signals 5, where the transmitted radar signals 4 have been reflected by one or more objects 6, each object giving rise to one or more radar detections $8_L$, $8_R$.

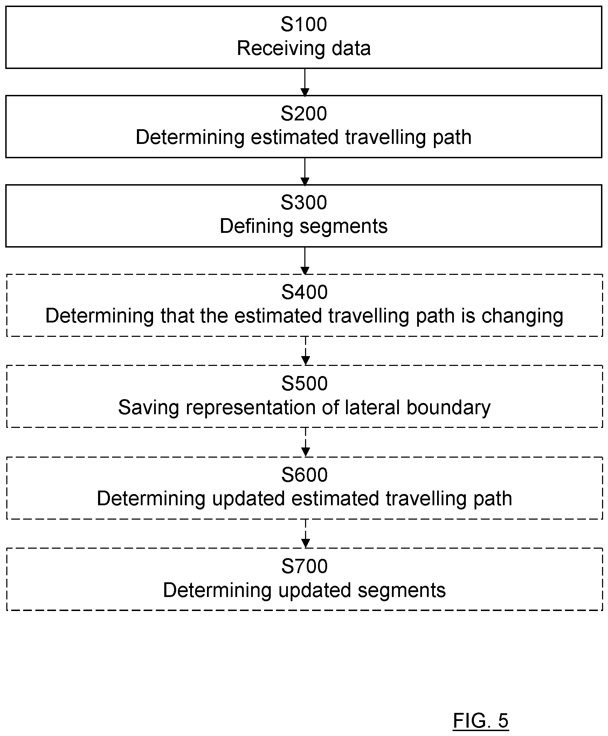

With reference to Figure 5, the present disclosure also relates to a method for a vehicle environmental detection system 3. The method comprises receiving S100 data regarding one or more stationary detections $8_L$, $8_R$ representing objects, determining S200 an estimated travelling path E, and defining S300 a plurality of segments 11a-11j along the estimated travelling path E. The segments 11a-11j together define an estimated road lane 13, where each segment 11a-11j is defined by a corresponding segment length $e_h$, $e_j$ along the estimated travelling path E, and by at least one lateral distance $d_L$, $d_R$ from the estimated travelling path E to at least one lateral boundary $12_L$, $12_R$ of the corresponding segment 11a-11j.

According to some aspects, the method further comprises determining S400 that the estimated travelling path $E_A$ is changing, and saving S500 a representation $14_L$, $14_R$ of at least one lateral boundary $12_{LA}$, $12_{RA}$ of each corresponding segment $11_A$. The method further comprises determining S600 an updated estimated travelling path $E_B$, and determining S700 updated segments $11_B$ such that, where possible for each updated segment $11_{NB}$, updated lateral distances $d_{LB}$, $d_{RB}$ are determined for the updated estimated travelling path $E_B$ and the saved representation $14_L$, $14_R$ of the lateral boundary.

According to some aspects, the environmental detection system 3 is used in an ego vehicle 1, where the method comprises determining the estimated travelling path E by performing an analysis of at least one of determined ego velocity $v_e$, steering wheel angle and yaw rate of the ego vehicle 1.

According to some aspects, the method further comprises forming the estimated road lane 13, 13', 13" by means of a predetermined number of segments 11, 11', 11". Previous segments are discarded and new segments are added as the environmental detection system 3 moves such that the predetermined number of segments 11, 11', 11" is maintained.

The present disclosure also relates to a control unit arrangement 9 adapted to control a vehicle environmental detection system 3 and adapted to execute the method according to the above.

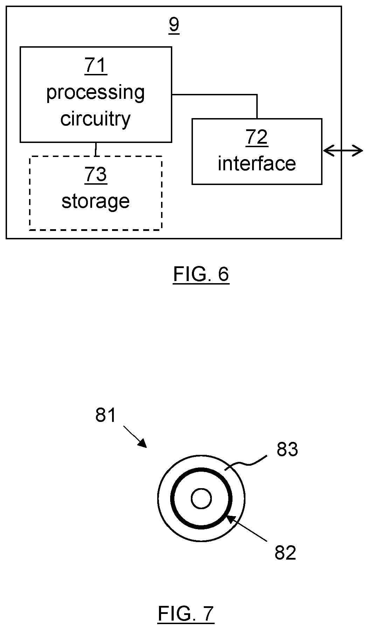

Figure 6 schematically illustrates, in terms of a number of functional units, the components of the control unit 9 according to an embodiment.

Processing circuitry 71 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 73. The processing circuitry 71 may further be provided as at least one application specific integrated circuit (ASIC), or field programmable gate array (FPGA).

Particularly, the processing circuitry 71 is configured to cause the control unit 9 to perform a set of operations, or steps. These operations, or steps, were discussed above in connection to the various radar transceivers and methods. For example, the storage medium 73 may store the set of operations, and the processing circuitry 71 may be configured to retrieve the set of operations from the storage medium 73 to cause the control unit 9 to perform the set of operations. The set of operations may be provided as a set of executable instructions. Thus, the processing circuitry 71 is thereby arranged to execute methods and operations as herein disclosed.

The storage medium 73 may also comprise persistent storage, which, for example, can be any single one or combination of magnetic memory, optical memory, solid state memory or even remotely mounted memory.

The control unit 9 may further comprise a communications interface 72 for communications with at least one other unit such as for example the vehicle radar system 3. As such, the communications interface 72 may comprise one or more transmitters and receivers, comprising analogue and digital components and a suitable number of ports for wired or wireless communication.

The processing circuitry 71 is adapted to control the general operation of the control unit 9 e.g. by sending data and control signals to the external unit and the storage medium 73, by receiving data and reports from the external unit, and by retrieving data and instructions from the storage medium 73. Other components, as well as the related functionality, of the control unit 9 are omitted in order not to obscure the concepts presented herein.

Figure 7 shows a computer program product 81 comprising computer executable instructions 82 arranged on a computer readable medium 83 to execute any of the methods disclosed herein.

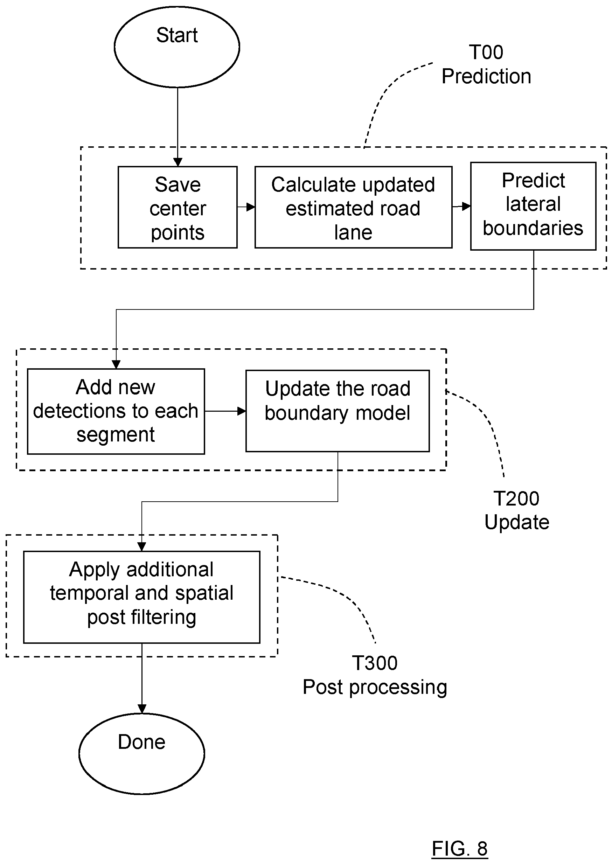

The following is with reference to Figure 8 that shows a flowchart for further methods according to some aspects. After start, there is a prediction block T100 that comprises the processing stages "Save center points", referring to the temporarily saved center points $14_L$, $14_R$, "Calculate updated estimated road lane" and "Predict lateral boundaries". These first three processing stages ensure that the road boundary estimate from a previous cycle is correctly propagated to the current cycle.

Then there is an update block T200 that includes "Add new detections to each segment" where incoming detections are added and assigned to the correct segment according to the current estimated road lane 13. With these new detections, the boundary model for each segment can be updated.

Finally, there is a post processing block T300 that consists of "Apply additional temporal and spatial post filtering". Here, final spatial and temporal post filtering can be applied as post processing to further smooth and enhance the results. After this, the procedure is done.

The above is only an example, where one or more of the blocks and steps in the blocks are optional.

The present disclosure is not limited to the examples above, but may vary freely within the scope of the appended claims. For example, the radar system may be implemented in any type of vehicle such as cars, trucks and buses as well as boats and aircraft.

Generally, the radar system can be any kind of vehicle environmental detection system 3 that comprises a data retrieval arrangement 7, for example in the form of one or more radar transceivers, and/or one or more camera devices and/or one or more Lidar transceivers. The environmental detection system 3 should according to some aspects be applicable for a point cloud.

According to some aspects, with reference to Figure 1, the vehicle environmental detection system 3 may be adapted to be in contact, suitably by means of wireless communication 41, with external units, for example a communication system 40. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

It is also appreciated that some processing functions may be performed by resources in a remote network 42, such as a remote server 43.

The control unit arrangement 9 may be constituted by one or more control unit parts that can be separate from each other. Some or all control unit parts may be comprised in a control unit arrangement 9 and/or a remote server 43.

When the environmental data retrieval arrangements 7, such as for example radar transceivers 7, are positioned in a vehicle 1, the control unit 9 is according to some aspects at least partly positioned in the same vehicle 1.

The vehicle environmental detection system 3 according to some aspects arranged to independently classify detections into moving or stationary detections.

In this context, a cycle is one observation phase in which the environmental detection system 3 acquires data, processes the date on several signal processing levels and sends out available results. This can be a fixed time interval, or it can be a dynamic time interval depending on environment conditions and processing load. For a radar system, the cycle is a radar cycle.

All detections correspond to detected target objects.

The estimated road lane 13 is not limited to any parametric shape such as circle or clothoid. Instead, it can be represented arbitrarily using an array of arbitrary points.

In typical vehicle setups, it is a feasible option to use a clothoid model to incorporate vehicle rotation and derivative of rotation as inputs.

The representation allows for spatial and temporal filtering because the segments 11a-j have semantic assignment to the physical world and thus temporal filtering can be applied.

**Claims**

1. A vehicle environmental detection system (3) comprising a control unit arrangement (9), and at least one environmental data retrieval arrangement (7) that is adopted to provide one or more detections ($8_L$, $8_R$) representing objects, **characterized in that** the environmental detection system (3) is adapted to

    - determine an estimated travelling path (E), and to
    - define a plurality of segments (11a-11j) along the estimated travelling path (E),

    where the segments (11a-11j) together define an estimated road lane (13), where each segment (11a-11j) is defined by a corresponding segment length ($e_h$, $e_j$) along the estimated travelling path (E), and by at least one lateral distance ($d_L$, $d_R$) from the estimated travelling path (E) to at least one lateral boundary ($12_L$, $12_R$) of the corresponding segment (11a-11j).

2. The vehicle environmental detection system (3) according to claim 1, wherein each segment (11a-11j) further is defined by an angle ($\alpha_a$, $\alpha_c$) that corresponds to a curvature of the segment (11a-11j) along the estimated travelling path (E).

3. The vehicle environmental detection system (3) according to any one of the claims 1 or 2, wherein the environmental detection system (3) is adapted to define each boundary ($12_L$, $12_R$) by means of one or more stationary detections ($8_L$, $8_R$).

4. The vehicle environmental detection system (3) according to claim 3, wherein the environmental detection system (3) is adapted to define each lateral boundary ($12_L$, $12_R$) by means of a stationary detection ($8_L$, $8_R$) in the present segment that is positioned closest to the estimated travelling path (E).

5. The vehicle environmental detection system (3) according to any one of the claims 3 or 4, wherein the environmental detection system (3) is adapted to define each lateral boundary ($12_L$, $12_R$) by means of a histogram of distances to stationary detections ($8_L$, $8_R$) in the present segment.

6. The vehicle environmental detection system (3) according to any one of the claims 3-5, wherein the environmental detection system (3) is adapted to assign weights to the stationary detections ($8_L$, $8_R$) in each segment, where each weight corresponds to a determined possibility that the corresponding stationary detection ($8_L$, $8_R$) is associated with a road lane border object (6), where the environmental detection system (3) is adapted to define the lateral boundary ($12_L$, $12_R$) of the present segment by means of the stationary detection ($8_L$, $8_R$) that has been assigned the highest weight value that corresponds to a highest determined possibility.

7. The vehicle environmental detection system (3) according to any one of the previous claims, wherein the environmental detection system (3) is adapted to define the segments (11a-11j) in stationary coordinates such that each segment will remain at the same physical position when the vehicle environmental detection system (3) moves.

8. The vehicle environmental detection system (3) according to any one of the previous claims, wherein the environmental detection system (3) is adapted to be installed in an ego vehicle (1), and where the environmental detection system (3) further is adapted to determine the estimated travelling path (E) by performing an analysis of at least one of determined ego velocity ($v_e$), steering wheel angle and yaw rate of the ego vehicle (1).

9. The vehicle environmental detection system (3) according to any one of the previous claims, wherein the environmental detection system (3) is adapted to form the estimated road lane (13, 13', 13") by means of a predetermined number of segments (11, 11', 11"), where previous segments are discarded and new segments are added as the environmental detection system (3) moves such that the predetermined number of segments (11, 11', 11") is maintained.

10. The vehicle environmental detection system (3) according to any one of the previous claims, wherein the environmental detection system (3) is adapted to

    - determine that the estimated travelling path ($E_A$) is changing;
    - save a representation ($14_L$, $14_R$) of at least one lateral boundary ($12_{LA}$, $12_{RA}$) of each corresponding segment ($11_A$);
    - determine an updated estimated travelling path ($E_B$); and to
    - determine updated segments ($11_B$) such that, where possible for each updated segment ($11_{NB}$), updated lateral distances ($d_{LA}$, $d_{RB}$) are determined for the updated estimated travelling path ($E_B$) and the saved representation ($14_L$, $14_R$) of said lateral boundary.

11. A method for a vehicle environmental detection system (3), where the method comprises:

    receiving (S100) data regarding one or more stationary detections ($8_L$, $8_R$) representing objects;
    determining (S200) an estimated travelling path (E); and
    defining (S300) a plurality of segments (11a-11j) along the estimated travelling path (E);

    where the segments (11a-11j) together define an estimated road lane (13), where each segment (11a-11j) is defined by a corresponding segment length ($e_h$, $e_j$) along the estimated travelling path (E), and by at least one lateral distance ($d_L$, $d_R$) from the estimated travelling path (E) to at least one lateral boundary ($12_L$, $12_R$) of the corresponding segment (11a-11j).

12. The method according to claim 11, further comprising

    determining (S400) that the estimated travelling path ($E_A$) is changing;
    saving (S500) a representation ($14_L$, $14_R$) of at least one lateral boundary ($12_{LA}$, $12_{RA}$) of each corresponding segment ($11_A$);
    determining (S600) an updated estimated travelling path ($E_B$); and
    determining (S700) updated segments ($11_B$) such that, where possible for each updated segment ($11_{NB}$), updated lateral distances ($d_{LB}$, $d_{RB}$) are determined for the updated estimated travelling path ($E_B$) and the saved representation ($14_L$, $14_R$) of the lateral boundary.

13. The method according to any one of the claims 11 or 12, wherein the environmental detection system (3) is used in an ego vehicle (1), and where the method comprises determining the estimated travelling path (E) by performing an analysis of at least one of determined ego velocity ($v_e$), steering wheel angle and yaw rate of the ego vehicle (1).

14. The method according to any one of the claims 11-13, further comprising forming the estimated road lane (13, 13', 13") by means of a predetermined number of segments (11, 11', 11"), where previous segments are discarded and new segments are added as the environmental detection system (3) moves such that the predetermined number of segments (11, 11', 11") is maintained.

15. A control unit arrangement (9) adapted to control a vehicle environmental detection system (3) and adapted to execute the method according to any one of the claims 11-14.

FIG. 1

EP 4 357 813 A1

10

FIG. 2

FIG. 3A

FIG. 3B

FIG. 3C

FIG. 4A

FIG. 4B

S100
Receiving data

S200
Determining estimated travelling path

S300
Defining segments

S400
Determining that the estimated travelling path is changing

S500
Saving representation of lateral boundary

S600
Determining updated estimated travelling path

S700
Determining updated segments

FIG. 5

<u>9</u>

<u>71</u>
processing
circuitry

<u>72</u>
interface

<u>73</u>
storage

FIG. 6

81

83

82

FIG. 7

Start

T00
Prediction

Save center points → Calculate updated estimated road lane → Predict lateral boundaries

Add new detections to each segment → Update the road boundary model

T200
Update

Apply additional temporal and spatial post filtering

T300
Post processing

Done

FIG. 8

Europäisches
Patentamt

European
Patent Office

Office européen
des brevets

**EUROPEAN SEARCH REPORT**

Application Number

EP 22 20 3038

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 803 828 B1 (NISSAN NORTH AMERICA INC [US]) 30 March 2022 (2022-03-30) | 1-4,6-15 | INV. G01S13/931 |
| Y | * paragraph [0124] – paragraph [0166]; figures 8-12 * <br> * paragraph [0080] – paragraph [0102]; figure 5 * <br> * paragraph [0027]; figure 1 * <br> ----- | 5,8,13 | G01S7/41 <br> G01S13/52 <br> B60W30/095 <br> B60W30/12 <br> G01C21/36 |
| Y | EP 3 958 016 A1 (ZENUITY AB [SE]) 23 February 2022 (2022-02-23) | 5 | |
| A | * paragraph [0068] * <br> * paragraph [0122] – paragraph [0123] * <br> ----- | 6,7 | |
| Y | US 2016/305785 A1 (NISHIJIMA MASAKAZU [JP] ET AL) 20 October 2016 (2016-10-20) <br> * paragraph [0035] * <br> ----- | 8,13 | |

TECHNICAL FIELDS
SEARCHED      (IPC)

G01S
B60W
G01C

The present search report has been drawn up for all claims

| Place of search | Date of completion of the search | Examiner |
|---|---|---|
| Munich | 24 March 2023 | Kaleve, Abraham |

EPO FORM 1503 03.82 (P04C01)

## ANNEX TO THE EUROPEAN SEARCH REPORT
## ON EUROPEAN PATENT APPLICATION NO.

EP 22 20 3038

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2023

| Patent document cited in search report | | | Publication date | Patent family member(s) | | | Publication date |
|---|---|---|---|---|---|---|---|
| EP | 3803828 | B1 | 30-03-2022 | CN | 112204350 | A | 08-01-2021 |
| | | | | CN | 112204633 | A | 08-01-2021 |
| | | | | EP | 3803274 | A1 | 14-04-2021 |
| | | | | EP | 3803828 | A1 | 14-04-2021 |
| | | | | JP | 6911214 | B1 | 28-07-2021 |
| | | | | JP | 7140849 | B2 | 21-09-2022 |
| | | | | JP | 2021519941 | A | 12-08-2021 |
| | | | | JP | 2021520003 | A | 12-08-2021 |
| | | | | RU | 2756872 | C1 | 06-10-2021 |
| | | | | RU | 2762786 | C1 | 22-12-2021 |
| | | | | US | 2019369616 | A1 | 05-12-2019 |
| | | | | US | 2021086795 | A1 | 25-03-2021 |
| | | | | WO | 2019231456 | A1 | 05-12-2019 |
| | | | | WO | 2019231521 | A1 | 05-12-2019 |
| EP | 3958016 | A1 | 23-02-2022 | CN | 114074667 | A | 22-02-2022 |
| | | | | EP | 3958016 | A1 | 23-02-2022 |
| | | | | US | 2022055660 | A1 | 24-02-2022 |
| US | 2016305785 | A1 | 20-10-2016 | CN | 106056571 | A | 26-10-2016 |
| | | | | DE | 102016206117 | A1 | 20-10-2016 |
| | | | | JP | 6350374 | B2 | 04-07-2018 |
| | | | | JP | 2016206776 | A | 08-12-2016 |
| | | | | US | 2016305785 | A1 | 20-10-2016 |

EPO FORM P0459

For more details about this annex : see Official Journal of the European Patent Office, No. 12/82

**EP 4 357 813 A1**

**Patent documents cited in the description**

- US 11226407 B2